(19)

Europäisches Patentamt
European Patent Office
Office européen des brevets

(11) **EP 4 195 325 A1**

(12) **EUROPEAN PATENT APPLICATION**
published in accordance with Art. 153(4) EPC

(43) Date of publication:
**14.06.2023 Bulletin 2023/24**

(21) Application number: **21852181.3**

(22) Date of filing: **06.08.2021**

(51) International Patent Classification (IPC):
**H01M 4/525** (2010.01)

(52) Cooperative Patent Classification (CPC):
**C01G 53/00; H01M 4/505; H01M 4/525;**
Y02E 60/10

(86) International application number:
**PCT/JP2021/029259**

(87) International publication number:
**WO 2022/030608 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.08.2020 JP 2020135158**

(71) Applicant: **Basf Toda Battery Materials LLC
Sanyo-Onoda Yamaguchi 756-0847 (JP)**

(72) Inventors:
• **TANIMOTO, Satoshi
Sanyoonoda-shi, Yamaguchi 756-0847 (JP)**

• **NOGUCHI, Hiroyoshi
Sanyoonoda-shi, Yamaguchi 756-0847 (JP)**
• **QUAN, Zhen
Sanyoonoda-shi, Yamaguchi 756-0847 (JP)**
• **KIMURA, Noriyasu
Sanyoonoda-shi, Yamaguchi 756-0847 (JP)**
• **WAKIYAMA, Tsuyoshi
Sanyoonoda-shi, Yamaguchi 756-0847 (JP)**
• **KOGA, Kazumichi
Sanyoonoda-shi, Yamaguchi 756-0847 (JP)**
• **TOMOTA, Yoko
Amagasaki-shi, Hyogo 660-0083 (JP)**

(74) Representative: **Reitstötter Kinzebach
Patentanwälte
Im Zollhof 1
67061 Ludwigshafen (DE)**

(54) **POSITIVE ELECTRODE ACTIVE MATERIAL FOR NON-AQUEOUS ELECTROLYTE SECONDARY CELL, AND NON-AQUEOUS ELECTROLYTE SECONDARY CELL**

(57)   This positive electrode active material is characterized by comprising a composite oxide containing Li, Ni, and, optionally, at least one element other than Li and Ni, and characterized in that one of the following applies: for primary particles constituting secondary particles of the composite oxide, the coefficient of variation of span represented by the formula $(D_1 90 - D_1 10)/D_1 50$ (where $D_1 10$, $D_1 50$, and $D_1 90$ are particle diameters in which the cumulative value of the particle diameter distribution of the primary particle size in terms of quantity correspond to 10%, 50%, and 90%, respectively) is 17% or below; the coefficient of variation of $D_1 50$ is 19% or below; and, for the secondary particles, the values of |[(element ratio 1 - element ratio 21)/element ratio 1]| $\times$ 100, |[(element ratio 1 - element ratio 22)/element ratio 1]| $\times$ 100, and |[(element ratio 1 - element ratio 23)/element ratio 1]| $\times$ 100 (where element ratios 1, 21, 22, and 23 are such that the values of the element ratios (Li/(Ni + other elements)) for the total secondary particles, small particles, medium particles, and large particles) are all at 1.00% or below.

**Description**

TECHNICAL FIELD

The present invention relates to a positive electrode active material for non-aqueous electrolyte secondary batteries, capable of providing non-aqueous electrolyte secondary batteries with a sufficient battery capacity and excellent cycle properties, and to a non-aqueous electrolyte secondary battery using the positive electrode active material.

BACKGROUND ART

Non-aqueous electrolyte secondary batteries being small and lightweight and having a high energy density are available as a driving power source for mobile telephones, notebook personal computers and the like. Among them, lithium-ion secondary batteries having a high charge/discharge capacity and using a material such as lithium cobalt oxide or lithium nickel oxide as a positive electrode are frequently used.

As positive electrode active materials for lithium-ion secondary batteries, conventionally, researches have actively been performed on the following: a nickel-cobalt-manganese (NCM) positive electrode active material in which part of nickel is substituted with cobalt and manganese is introduced; and a nickel-cobalt-aluminum (NCA) positive electrode active material in which part of nickel is substituted with cobalt and aluminum is introduced.

In calcination performed when the positive electrode active material such as the NCM positive electrode active material or the NCA positive electrode active material is produced, a mixture of at least a lithium compound and a precursor compound of the positive electrode active material is filled in a vessel to cause lithiation and crystallization. The lithiation is a reaction between metallic hydroxide or metallic oxide, and a lithium compound such as LiOH. For example, a reaction with respect to a case where LiOH is used, and requires a fixed quantity of oxygen as shown below. By the lithiation, water (water vapor) is generated together with a composite oxide such as a lithium-nickel-composite oxide, and crystalline growth proceeds by further calcination at a high temperature.

$$Me(OH)_2 + LiOH \cdot H_2O + 1/4O_2 \rightarrow LiMeO_2 + 5/2H_2O$$

$$MeO + LiOH + 1/4O_2 \rightarrow LiMeO_2 + 1/2H_2O$$

However, since of the water (water vapor) generated by the lithiation, in a composite compound particles layer filled in the vessel: molten LiOH inhibits a reaction with lithium within the composite compound particles layer to make the contact with the composite compound ununiform; in addition, necessary oxygen diffusion to the composite compound particles layer filled in the vessel is obstructed and ununiform of temperature readily occurs. As a result, in each of secondary particles, growth and crystalline growth of primary particles constituting the secondary particle vary, and a primary particle diameter varies among the secondary particles. Then, when the obtained positive electrode active material is applied to the positive electrode of a lithium-ion secondary battery and it is subjected to a long-term charge/discharge cycle, cracking occurs from grain boundary parts of the positive electrode active material, which deteriorates cycle properties.

Accordingly, approaches have been made to suppress the variation in the crystalline growth, and positive electrode active materials are proposed.

Patent Literature 1 describes a lithium-nickel-cobalt-composite oxide which can be obtained by: filling a mixture of a nickel-cobalt-composite oxide and a lithium compound in a calcination vessel; performing preliminary calcination at a calcination temperature of 500°C or more and 600°C or less; and then, performing main calcination at a calcination temperature of 680°C or more and 780°C or less. The lithium-nickel-cobalt-composite oxide is composed of secondary particles where, for example, two or more primary particles of 1μm or less aggregate into a spherical shape.

Patent Literature 2 describes a positive electrode active material for non-aqueous electrolyte secondary batteries, which can be produced by: mixing a composite hydroxide obtained by a coprecipitation reaction and a lithium compound; and performing calcination at two steps of provisional calcination at, for example, 500°C to 900°C and main calcination at, for example, 800°C to 1200°C. In the positive electrode active material, a structure of secondary particles is such that primary particles aggregate, an average particle diameter (D 1) of the primary particles is 0.9μm or less, and D1 and a standard deviation ($\sigma$) of D1 satisfy a relationship of $D1/\sigma^2 \geq 24$.

CITATION LIST

PATENT LITERATURE

[Patent Literature 1] WO 2019/194150
[Patent Literature 2] Japanese Patent No. 6075440

SUMMARY OF INVENTION

TECHNICAL PROBLEM

Although two-step calcination is performed when the lithium-nickel-cobalt-composite oxide described in Patent Literature 1 is obtained, ununiform of flow effect due to the lithium compound is not sufficiently resolved, oxygen diffusion is insufficient, and ununiform of temperature readily occurs. Consequently, in the obtained lithium-nickel-cobalt-composite oxide, crystalline growth of the primary particles varies and the primary particle diameter varies among the secondary particles, so that when the lithium-nickel-cobalt-composite oxide is used as a positive electrode of a lithium-ion secondary battery, cracking occurs from grain boundary parts by a charge/discharge cycle.

The positive electrode active material described in Patent Literature 2 can be obtained, preferably, through two-step calcination in order to adjust a crystallite size and obtain high uniformity of the primary particles in each secondary particle. However, like the lithium-nickel-cobalt-composite oxide described in Patent Literature 1, no discussion is performed as to the entire secondary particles, that is, the crystalline growth of the primary particles varies and the primary particle diameter varies among the secondary particles, so that when the positive electrode active material is used as a positive electrode of a lithium-ion secondary battery, depending on the secondary particles, there is a possibility cracking readily occurs from grain boundary parts by the charge/discharge cycle.

The present invention is accomplished in view of the above conventional problems, and an object thereof is to provide a positive electrode active material capable of providing non-aqueous electrolyte secondary batteries with a sufficient battery capacity and excellent cycle properties, and a non-aqueous electrolyte secondary battery using the same.

SOLUTION TO PROBLEM

In order to achieve the above object, according to the present invention, a positive electrode active material is constructed by: adjusting each variation coefficient associated with particle diameters of primary particles constituting secondary particles of a lithium-nickel-composite oxide to a specific range; and adjusting values associated with composition of the secondary particles of the lithium-nickel-composite oxide to a specific range.

A positive electrode active material for non-aqueous electrolyte secondary batteries according to the present invention (hereinafter, referred to also as "positive electrode active material A") comprises a lithium-nickel-composite oxide containing lithium and nickel, and optionally containing at least one element other than lithium and nickel, wherein

primary particles constituting each of secondary particles of the lithium-nickel-composite oxide have a variation coefficient of span of 17% or less, and the span is represented by the following formula ($\alpha$):

$$(D_190 - D_110)/D_150 \qquad (\alpha)$$

in which:

$D_110$ is a particle diameter corresponding to 10% of an integrated value in a number standard-particle diameter distribution of primary particle size;
$D_150$ is a particle diameter corresponding to 50% of the integrated value in the number standard-particle diameter distribution of primary particle size, and the $D_150$ is an average particle diameter; and
$D_190$ is a particle diameter corresponding to 90% of the integrated value in the number standard-particle diameter distribution of primary particle size.

A positive electrode active material for non-aqueous electrolyte secondary batteries according to the present invention (hereinafter, referred to also as "positive electrode active material B") comprises a lithium-nickel-composite oxide containing lithium and nickel, and optionally containing at least one element other than lithium and nickel, wherein primary particles constituting each of secondary particles of the lithium-nickel-composite oxide have a variation coefficient of $D_150$ of 19% or less, the $D_150$ is a particle diameter corresponding to 50% of an integrated value in a number standard-particle diameter distribution of primary particle size, and the $D_150$ is an average particle diameter.

A positive electrode active material for non-aqueous electrolyte secondary batteries according to the present invention (hereinafter, referred to also as "positive electrode active material C") comprises a lithium-nickel-composite oxide containing lithium and nickel, and optionally containing at least one element other than lithium and nickel, wherein

secondary particles of the lithium-nickel-composite oxide have each of values of 1.00% or less, and each of the values is represented by the following formula (β1), the following formula (β2), or the following formula (β3):

$$|[(ER1 - ER21)/ER1]| \times 100 \qquad (\beta1)$$

$$|[(ER1 - ER22)/ER1]| \times 100 \qquad (\beta2)$$

$$|[(ER1 - ER23)/ER1]| \times 100 \qquad (\beta3)$$

in which:

ER1 is an element ratio of entire secondary particles;
ER22 is an element ratio of middle particles having a particle diameter of a range within $\pm 3\mu m$ relative to $D_2 50$ of the entire secondary particles, the $D_2 50$ is a particle diameter corresponding to 50% of an integrated value in a volume standard-particle diameter distribution of secondary particle size, and the $D_2 50$ is an average particle diameter;
ER21 is an element ratio of small particles having a particle diameter smaller than the particle diameter of the middle particles;
ER23 is an element ratio of large particles having a particle diameter larger than the particle diameter of the middle particles; and
each element ratio is a ratio of an amount of lithium to a total amount of nickel and the element other than lithium and nickel, and the ratio is represented by the formula:

$$(\text{Amount of lithium})/(\text{Total amount of nickel and the element}).$$

A non-aqueous electrolyte secondary battery according to the present invention comprises a positive electrode containing at least one of the positive electrode active material A, the positive electrode active material B and the positive electrode active material C.

In the present specification, at least two of the "positive electrode active material A", the "positive electrode active material B" and the "positive electrode active material C" will also be collectively referred to merely as "positive electrode active material for non-aqueous electrolyte secondary batteries" or "positive electrode active material". Moreover, the "number standard-particle diameter distribution of primary particle size" will also be referred to merely as "primary particle size distribution" and the "volume standard-particle diameter distribution of secondary particle size" will also be referred to merely as "secondary particle size distribution".

ADVANTAGEOUS EFFECTS OF INVENTION

According to the present invention, the following can be provided: a positive electrode active material for non-aqueous electrolyte secondary batteries, in which no cracking occurs from grain boundary parts (which are primary particle surface layer parts) in the secondary particles even when it is subjected to a long-term charge/discharge cycle, and which is capable of providing non-aqueous electrolyte secondary batteries with a sufficient battery capacity and excellent cycle properties; and a non-aqueous electrolyte secondary battery using the same.

DESCRIPTION OF EMBODIMENTS

Hereinafter, embodiments for carrying out the present invention will be described. The following description of preferred embodiments is essentially nothing but illustrative, and does not intend to restrict the present invention, its application method or its use.

<Positive electrode active material for non-aqueous electrolyte secondary batteries>

A positive electrode active material for non-aqueous electrolyte secondary batteries, according to the present invention, is composed of a lithium-nickel-composite oxide containing lithium (Li) and nickel (Ni), and optionally containing at least one element other than Li and Ni. Primary particles constituting each of secondary particles of the lithium-nickel-composite oxide have the following feature 1 (the positive electrode active material A and the positive electrode active material B), and the secondary particles of the lithium-nickel-composite oxide have the following feature 2 (the positive electrode active material C).

[Feature 1]

(Positive electrode active material A)

A variation coefficient of span is 17% or less, and the span is represented by the following formula ($\alpha$):

$$(D_190 - D_110)/D_150 \qquad (\alpha)$$

in which:

$D_110$ is a particle diameter corresponding to 10% of an integrated value in a primary particle size distribution;
$D_150$ is a particle diameter corresponding to 50% of the integrated value in the primary particle size distribution, which is an average particle diameter; and
$D_190$ is a particle diameter corresponding to 90% of the integrated value in the primary particle size distribution.

(Positive electrode active material B)

A variation coefficient of $D_150$ is 19% or less, and the $D_150$ is the particle diameter corresponding to 50% of the integrated value in the primary particle size distribution, which is the average particle diameter.

[Feature 2]

(Positive electrode active material C)

Each of values is 1.00% or less, and each of the values is represented by the following formula ($\beta1$), the following formula ($\beta2$) or the following formula ($\beta3$):

$$|[(ER1 - ER21)/ER1]| \times 100 \qquad (\beta1)$$

$$|[(ER1 - ER22)/ER1]| \times 100 \qquad (\beta2)$$

$$|[(ER1 - ER23)/ER1]| \times 100 \qquad (\beta3)$$

in which:

ER1 is an element ratio of entire secondary particles;
ER22 is an element ratio of middle particles having a particle diameter of a range within $\pm 3\mu m$ relative to $D_250$ of the entire secondary particles, and the $D_250$ is a particle diameter corresponding to 50% of an integrated value in a secondary particle size distribution, which is an average particle diameter;
ER21 is an element ratio of small particles having a particle diameter smaller than the particle diameter of the middle particles;
ER23 is an element ratio of large particles having a particle diameter larger than the particle diameter of the middle particles; and
each element ratio is a ratio of an amount of lithium to a total amount of nickel and the other element(s), which is represented by the formula: Lithium/(Nickel + Other element(s)).

[Regarding Feature 1]

When a lithium-composite oxide is prepared by calcination of a mixture of a precursor compound which is a metallic hydroxide or a metallic oxide with a lithium compound such as LiOH as described above, by causing the mixture to undergo uniform lithiation and uniform crystalline growth, variation (variation A) in particle growth and crystalline growth of the primary particles constituting the secondary particles can be suppressed in each of the secondary particles, and variation (variation B) in primary particle diameter among the secondary particles can be suppressed.

When a positive electrode active material comprising a lithium-composite oxide in which these variations are sufficiently suppressed is applied to a positive electrode of a non-aqueous electrolyte secondary battery and it is subjected to a long-term charge/discharge cycle, no heavy load is applied to any of the secondary particles, so that the possibility that cracking occurs from grain boundary parts in the secondary particles is extremely low. As a result, the non-aqueous electrolyte secondary battery can maintain excellent cycle properties.

Since the variation among the secondary particles is small, parts where cracking can occur are suppressed in pressurization at the time of electrode formation at a positive electrode. For this reason, the secondary battery can withstand high pressure and an amount of positive electrode active material per volume can be increased, so that a high capacity can be realized.

To suppress the variation A, i.e., the variation in particle growth and crystalline growth of the primary particles constituting the secondary particles in each of the secondary particles is to make sharp distribution of the primary particles existing in each of the secondary particles (the primary particle size distribution is sharp). It is considered that in a lithium-composite oxide in which the distribution of the primary particles existing in each of the secondary particles is sharp, variation in composition and bonding state of grain boundary parts is small, that is, defects of the grain boundary parts are small. As a result, it is considered that in this lithium-composite oxide, starting points of cracking from the grain boundary parts are extremely few.

On the other hand, to suppress the variation B, i.e., the variation in primary particle diameter among the secondary particles is to make substantially equal a ratio between Li and metallic compound(s) in lithiation and degree of calcination in crystalline growth to thereby make substantially equal the average particle diameter of the primary particles in each of the secondary particles. It is considered that in such lithium-composite oxide in which the average particle diameter of the primary particles is substantially equal in each of the secondary particles, there are hardly secondary particles which can be a kind of weak point where particle cracking occurs and metallic element(s) existing in the positive electrode active material elute(s) into an electrolytic solution during a long-term charge/discharge cycle and when a secondary battery is stored for a long period of time in a charged state.

The positive electrode active material A according to the present invention focuses on suppression of the variation A. In the positive electrode active material A, regarding the primary particles constituting the secondary particles of the lithium-nickel-composite oxide, the span (no unit) represented by the following formula ($\alpha$) indicates sharpness of the primary particle size distribution, and represents whether or not uniform lithiation and uniform crystalline growth occurred. The smaller the variation coefficient of the span is, the more preferable it is. When the variation coefficient is too large, there are large primary particles and small primary particles in each of the secondary particles, so that the problem at the grain boundary parts is not solved. Moreover, in the crystal structure, difference in degree of crystalline growth causes distortion of the composition or the like, which exists as a kind of defect and becomes a factor for cracking.

$$(D_1 90 - D_1 10)/D_1 50 \qquad (\alpha)$$

$D_1 10$: The particle diameter corresponding to 10% of the integrated value in the primary particle size distribution
$D_1 50$: The particle diameter corresponding to 50% of the integrated value in the primary particle size distribution (average particle diameter)
$D_1 90$: The particle diameter corresponding to 90% of the integrated value in the primary particle size distribution

In the positive electrode active material A according to the present invention, the variation coefficient of span is defined for the primary particles constituting the secondary particles of the lithium-nickel-composite oxide. Various values of the variation coefficient of span serve as a measure of whether or not the lithiation and the crystalline growth in respective secondary particles proceeded equally. When respective spans in a number N of secondary particles are equivalent to each other, it can be construed that equivalent lithiation and crystalline growth occurred in respective secondary particles, and the variation coefficient of span becomes close to 0%.

That is, the smaller the variation coefficient of span is, the more preferable it is. When the variation coefficient is too large, it is indicated that ununiform calcination due to ununiform lithiation, abnormal particle growth, abnormal crystalline growth and the like occurred. So that, variation in primary particle diameter is not suppressed in the number N of secondary particles. The "number N" is, for example, 10 or more as described later.

When the variation coefficient of span is 17% or less, preferably 15% or less, more preferably 13% or less, variation in the primary particle size distribution is suppressed in the number N of secondary particles. In the positive electrode active material of the present invention, composed of the lithium-nickel-composite oxide containing such secondary particles, no cracking occurs from the grain boundary parts in the secondary particles even when the active material is subjected to a long-term charge/discharge cycle, so that excellent cycle properties can be provided to the non-aqueous electrolyte secondary battery.

In the non-aqueous electrolyte secondary battery, since cracking from the grain boundary parts of the positive electrode active material used as the positive electrode can be suppressed, elution of a metal such as Ni in the positive electrode active material into an electrolytic solution can be sufficiently suppressed even in operations under high load.

On the other hand, the positive electrode active material B according to the present invention focuses on suppression of the variation B. In the positive electrode active material B, the optimum value of $D_150$ (the particle diameter corresponding to 50% of the integrated value in the primary particle size distribution (average particle diameter)) regarding the primary particles constituting the secondary particles of the lithium-nickel-composite oxide differs depending on composition, a secondary particle diameter and distribution thereof for the desired positive electrode active material. In general, when the $D_150$ is too large, since charge transfer resistance and diffusion resistance of lithium in particles become to be high during charge/discharge, there is a possibility that properties in a long-term charge/discharge cycle are adversely affected. When the $D_150$ is too small, conversely, since crystalline growth and/or particle growth are insufficient, there is a possibility that properties in a long-term charge/discharge cycle are adversely affected.

In the positive electrode active material B according to the present invention, the variation coefficient of $D_150$ is defined for the primary particles constituting the secondary particles of the lithium-nickel-composite oxide. Various values of the variation coefficient of $D_150$ serve as a measure of whether or not the lithiation and the crystalline growth proceeded equally among the secondary particles. When respective values of $D_150$ among a number N of secondary particles are equivalent to each other, variation in the lithiation and the crystalline growth is small among the number N of secondary particles, and the variation coefficient of $D_150$ becomes close to 0%. That is, the smaller the variation coefficient of $D_150$ is, the more preferable it is. When the variation coefficient is too large, it is indicated that ununiform lithiation, abnormal particle growth and the like occurred among the number N of secondary particles. By adjusting the values of $D_150$ so as to be such variation coefficient, standardization among the number N of secondary particles is achieved. The "number N" is, for example, 10 or more as described later.

Since the variation coefficient of $D_150$ is 19% or less, preferably 16% or less, variation in the primary particle diameter is suppressed among the number N of secondary particles. In the positive electrode active material of the present invention, composed of the lithium-nickel-composite oxide containing such secondary particles, cracking from the grain boundary parts in the secondary particles can be suppressed even when the active material is subjected to a long-term charge/discharge cycle, so that excellent cycle properties can be provided to the non-aqueous electrolyte secondary battery.

In the non-aqueous electrolyte secondary battery, since cracking from the grain boundary parts of the positive electrode active material used as the positive electrode can be suppressed, elution of a metal such as Ni in the positive electrode active material into an electrolytic solution can be sufficiently suppressed even in operations under high load.

As described above, in the positive electrode active material A according to the present invention, while the primary particles constituting the secondary particles of the lithium-nickel-composite oxide have the variation coefficient of span within the specific range, the primary particles can simultaneously have the variation coefficient of $D_150$ within the specific range. In the positive electrode active material B according to the present invention, while the primary particles constituting the secondary particles of the lithium-nickel-composite oxide have the variation coefficient of $D_150$ within the specific range, the primary particles can simultaneously have the variation coefficient of span within the specific range. It is particularly preferable that the primary particles in the positive electrode active material of the present invention have both the variation coefficient of span of 17% or less and the variation coefficient of $D_150$ of 19% or less.

While the $D_150$ is, for example, about $0.1 \mu m$ to about $1.0 \mu m$ in the positive electrode active material of the present invention, the $D_150$ is not particularly limited thereto. The $D_150$ is preferably about $0.1 \mu m$ to about $0.8 \mu m$, more preferably about $0.1 \mu m$ to about $0.6 \mu m$.

In the present specification, the particle diameters are values obtained based on an electron microscope photograph (SEM photograph) of the primary particles or the secondary particles of the positive electrode active material, which is taken by using a scanning electron microscope SEM-EDS "Field Emission type Scanning Electron Microscope JSM-7100F" commercially available from JEOL Ltd. with an acceleration voltage of 10kV so that the grain boundaries of the primary particles can be recognized. In this case, a scale displayed in the electron microscope photograph is used as a reference scale. There were observed 10 or more secondary particles so that about 50 to about 200 primary particles could be observed. The size of the secondary particles was selected from particles with a frequency of 10% to 90% in a volume standard-particle size distribution obtained by using a laser diffraction particle diameter distribution measuring apparatus "Microtrac HRA" commercially available from Nikkiso Co., Ltd.

On the SEM photograph, particles to be image-analyzed were marked by using image analysis software, for example, Image J or software of different programming language, and primary particles of marked particles were binarized to thereby calculate each area of the primary particles. From each area, a diameter of each primary particle was obtained by using perfect circle approximation. Then, for each of the secondary particles, histograms of the diameters of respective primary particles were obtained, and the following statistics were calculated.

$D_1 10$ ($\mu$m): The particle diameter corresponding to 10% of the integrated value in the primary particle size distribution
$D_1 50$ ($\mu$m): The particle diameter corresponding to 50% of the integrated value in the primary particle size distribution (average particle diameter)
$D_1 90$ ($\mu$m): The particle diameter corresponding to 90% of the integrated value in the primary particle size distribution

In order to confirm that the calculated numerical values of the particle diameters do not depend on determination of primary particles and there are significant differences among samples, the statistic was recalculated on each distribution by using bootstrapping. Here, from each primary particle size distribution, sampling was randomly performed with overlapping allowed, and the average particle diameter and the span were calculated. This step was repeated 1000 times, and the median value was treated as approximation of the statistic of a population. As a result, respective numerical values in the primary particle size distributions described above were substantially equivalent to respective numerical values obtained by bootstrapping, so that it was determined that extraction procedure of the primary particles in the image analysis was appropriate.

In addition, when the secondary particles in the present invention were extracted, for example, the variation coefficient of $D_1 50$ and the variation coefficient of span were calculated by the image analysis described above by using several secondary particles with a particle diameter close to a particle diameter corresponding to a frequency of 10%. As a result, it could be similarly confirmed that there were no significant variations in values of the variation coefficient of $D_1 50$ and the variation coefficient of span at a frequency of 50% and a frequency of 90%.

In the present specification, each variation coefficient is a value calculated based on the following equation by using a standard deviation and an average value which are calculated from the numerical values obtained by the above procedure of the image analysis software.

$$\text{Variation coefficient (\%)} = (\text{Standard deviation}/\text{Average value}) \times 100$$

[Regarding Feature 2]

As described above, when the primary particles constituting the secondary particles of the lithium-nickel-composite oxide have the above feature 1, that is, when both the variation A and the variation B are sufficiently suppressed, variation of composition is also sufficiently suppressed in the secondary particles.

In the entire secondary particles, a ratio of an amount of Li to a total amount of Ni and the other element(s) is derived from amounts of a lithium compound, a nickel compound and compound(s) of the other element(s) being used. When neither the variation A nor the variation B is sufficiently suppressed, if a particle diameter differs from each other among the secondary particles, the ratio of the amount of Li to the total amount of Ni and the other element(s) becomes to be different from each other. That is, for example, when the secondary particles are classified into secondary particles on a small particle diameter side, secondary particles with middle particle diameters and secondary particles on a large particle diameter side, the ratio of the amount of Li to the total amount of Ni and the other element(s) largely differs from each other among these three kinds of secondary particles.

On the other hand, in the lithium-nickel-composite oxide in which both the variation A and the variation B are sufficiently suppressed, ratios of respective differences between the *ratio* (= the ratio of the amount of Li to the total amount of Ni and the other element(s)) in the entire secondary particles and respective *ratios* in the above three kinds of secondary particles; to the *ratio* in the entire secondary particles are low. That is, it can be said that variation in composition (variation C) is sufficiently suppressed in such secondary particles.

The positive electrode active material C according to the present invention focuses on suppression of the variation C as described above. In the positive electrode active material C, regarding the secondary particles of the lithium-nickel-composite oxide, each of values represented by the following formula ($\beta$1), the following formula ($\beta$2) and the following formula ($\beta$3) is 1.00% or less.

$$|[(ER1 - ER21)/ER1]| \times 100 \qquad (\beta 1)$$

$$|[(ER1 - ER22)/ER1]| \times 100 \qquad (\beta 2)$$

$$|[(ER1 - ER23)/ER1]| \times 100 \qquad (\beta 3)$$

Here, the ER1, the ER21, the ER22 and the ER23 are as shown below respectively, and each element ratio is the above ratio of the amount of Li to the total amount of Ni and the other element(s), i.e., Li/(Ni + Other element(s)).

ER1: The element ratio of the entire secondary particles

ER22: The element ratio of the middle particles having a particle diameter of a range within $\pm 3 \mu m$ relative to $D_2 50$ of the entire secondary particles

$D_2 50$: The particle diameter corresponding to 50% of the integrated value in the secondary particle size distribution (average particle diameter)

ER21: The element ratio of the small particles having a particle diameter smaller than the particle diameter of the middle particles

ER23: The element ratio of the large particles having a particle diameter larger than the particle diameter of the middle particles

As described above, the entire secondary particles are classified into the small particles, the middle particles and the large particles based on the $D_2 50$ thereof. To obtain the small particles, the middle particles and the large particles each having a predetermined particle diameter from the entire secondary particles, for example, classification with a sieve and use of a classification apparatus can be adopted.

Each $D_2 50$ of the classified small particles, middle particles and large particles is not particularly limited. For example, it is preferable that each $D_2 50$ is about $0.5 \mu m$ to about $12 \mu m$, about $3 \mu m$ to about $18 \mu m$, and about $6 \mu m$ to about $22 \mu m$.

The lithium-nickel-composite oxide contains the secondary particles having each of the values represented by the formulae ($\beta 1$), ($\beta 2$) and ($\beta 3$) of 1.00% or less, preferably 0.70% or less, more preferably 0.65% or less, particularly preferably 0.60% or less. In the positive electrode active material C of the present invention, composed of such lithium-nickel-composite oxide, the variation C is sufficiently suppressed and no cracking occurs from the grain boundary parts in the secondary particles thereof even when the active material is subjected to a long-term charge/discharge cycle, so that excellent cycle properties can be provided to the non-aqueous electrolyte secondary battery.

The $D_2 50$ of the entire secondary particles is, for example, about $1 \mu m$ to about $30 \mu m$, as described later, in the positive electrode active material according to the present invention. The $D_2 50$ is not particularly limited, and it is preferably about $2 \mu m$ to about $25 \mu m$.

A span (no unit) represented by the following formula ($\gamma$) indicates sharpness of the secondary particle size distribution. In the positive electrode active material according to the present invention, the span is, for example, about 0.4 to about 1.5, and it is not particularly limited.

$$(D_2 90 - D_2 10)/D_2 50 \qquad (\gamma)$$

$D_2 10$: A particle diameter corresponding to 10% of the integrated value in the secondary particle size distribution

$D_2 50$: The particle diameter corresponding to 50% of the integrated value in the secondary particle size distribution (average particle diameter)

$D_2 90$: A particle diameter corresponding to 90% of the integrated value in the secondary particle size distribution

In the positive electrode active material C according to the present invention, the secondary particles of the lithium-nickel-composite oxide have each of the values represented by the above formulae ($\beta 1$), ($\beta 2$) and ($\beta 3$) within the above specific range, and the primary particles constituting the secondary particles can have the variation coefficient of span within the above specific range and/or the variation coefficient of $D_1 50$ within the above specific range. The positive electrode active material of the present invention is particularly preferable, in which the primary particles have both the variation coefficient of span of 17% or less and the variation coefficient of $D_1 50$ of 19% or less, and the secondary particles have each of the values represented by the above formulae ($\beta 1$), ($\beta 2$) and ($\beta 3$) of 1.00% or less.

The positive electrode active material according to the present invention is only needed to comprise the lithium-nickel-composite compound containing lithium and nickel, and optionally containing at least one element other than lithium and nickel, and a composition thereof is not particularly limited. It is preferable that the active material has a composition, for example, represented by the following formula (I):

$$Li_a Ni_b M_{1-b} O_2 \qquad (I)$$

in which M is at least one element other than Li, Ni and O, a is $0.95 \leq a \leq 1.40$, and b is $0.2 < b < 1$.

The element M other than Li, Ni and O is not particularly limited in the formula (I), and examples thereof include cobalt (Co), aluminum (Al), manganese (Mn), titanium (Ti), magnesium (Mg), zinc (Zn), niobium (Nb), tungsten (W), molybdenum (Mo), vanadium (V), chromium (Cr), calcium (Ca), iron (Fe), gallium (Ga), strontium (Sr), yttrium (Y), antimony (Sb), ruthenium (Ru), indium (In), tin (Sn), tantalum (Ta), bismuth (Bi), zirconium (Zr), boron (B), and the like. It is preferable that the element M contains particularly at least one of Co, Al and Mn among them.

In the positive electrode active material having the composition represented by the formula (I), it is preferable that an amount of Li "a", that is, a ratio of an amount of Li to a total amount of Ni and the element M (= Li/(Ni + M)), is $0.95 \leq a \leq 1.40$, further $0.95 \leq a \leq 1.25$, particularly $0.96 \leq a \leq 1.15$.

In the positive electrode active material having the composition represented by the formula (I), it is preferable that an amount of Ni "b", that is, a ratio of an amount of Ni to a total amount of Ni and the element M (= Ni/(Ni + M)), is $0.2 < b < 1$, further $0.3 < b < 1$, still further $0.4 < b < 1$, yet further $0.5 < b < 1$, particularly $0.8 < b < 1$.

Properties of the positive electrode active material according to the present invention cannot be determined unconditionally since they differ mainly according to the composition thereof. For example, it is preferable that values of the $D_2 50$ of the entire secondary particles, a crystallite size and a seat occupancy rate of Li are within the ranges shown below, respectively.

Although the $D_2 50$ of the entire secondary particles in a volume standard differs according to the uses of the desired positive electrode active material, it can be determined in consideration of attainment of a higher capacity by higher filling property and properties such as high cycle properties. The $D_2 50$ is preferably $1\mu m$ to $30\mu m$, more preferably $2\mu m$ to $25\mu m$.

The crystallite size can be calculated by XRD of the obtained positive electrode active material, and can be adjusted based on the desired composition, primary particle diameter and secondary particle diameter. For example, when the $D_2 50$ of the entire secondary particles is about $8\mu m$ to about $20\mu m$ and a content of Ni is 80mol% or more, the crystallite size is within a range of, preferably 50nm to 600nm, more preferably 60nm to 500nm, particularly preferably 60nm to 450nm. In general, when the crystallite size is too small, there is a possibility that crystal structure of the positive electrode active material is unstable. When the crystallite size is too large, there is a possibility that battery properties of a non-aqueous electrolyte secondary battery using the positive electrode active material as the positive electrode are deteriorated.

For example, in the case of a positive electrode active material where the $D_2 50$ is about $8\mu m$ to about $30\mu m$ and the content of Ni is more than 80mol% (for example, a positive electrode active material having a composition represented by the above formula (I) in which b is $0.8 < b < 1$), if the crystallite size calculated by the above XRD and the $D_1 50$ described above are substantially equal to each other, it can be proved that particle growth of the primary particles is not excessive when a ratio of the crystallite size to the $D_1 50$ (Crystallite size/$D_1 50$) is close to "1" which is the maximum value. When the ratio is too small, it is suggested that crystalline growth of the primary particles is excessive, so that there is a possibility that battery properties are deteriorated.

The seat occupancy rate of Li within a composition formula, in a Li-site, is 100% in theory. When a common precursor composite compound is used, the more optimum the lithiation is, the closer to 100% the seat occupancy rate of Li is. On the other hand, for example, during calcination when a positive electrode active material containing Ni, such as the positive electrode active material having the composition represented by the above formula (I), is produced, Ni contained mainly in a metal-site becomes $Ni^{2+}$, and the $Ni^{2+}$ moves to the Li-site and is substituted with Li. An amount of a metal which moves to the Li-site and is substituted with Li in this way is called a cation mixing amount. It is known that the cation mixing amount is usually about 0.1% to about 6.0%. From these, it can be considered that in the positive electrode active material of the present invention, when the cation mixing amount is about 0.1% to about 5.0%, further about 0.1% to about 4.0%, this cation mixing amount means that optimum lithiation occurred during calcination.

In the present specification, the crystallite size and the seat occupancy rate of Li are values determined, respectively, by obtaining XRD data of the positive electrode active material in accordance with the following method, and then, performing Rietveld analysis.

After obtaining the XRD data of the positive electrode active material under the following X-ray diffraction conditions by using X-ray diffractometer "SmartLab" commercially available from Rigaku Corporation, the Rietveld analysis is performed by using the XRD data with reference to R.A. Young, ed., "The Rietveld Method", Oxford University Press (1992).

(X-ray diffraction conditions)

| | |
|---|---|
| X-ray source: | Cu-K$\alpha$ ray |

(continued)

| | |
|---|---|
| Accelerating voltage and current: | 45kV and 200mA |
| Sampling width: | 0.02deg. |
| Scan range: | 15deg. to 122deg. |
| Scan speed: | 1.0step/min. |
| Divergence slit width: | 2/3deg. |
| Light receiving slit width: | 0.15mm |
| Scattering slit: | 2/3deg. |

<Method for producing Positive electrode active material for non-aqueous electrolyte secondary batteries>

The positive electrode active material for non-aqueous electrolyte secondary batteries according to the present invention is preferably produced, for example, by a method in which the following steps are performed in this order.

Step (1): A precursor composite compound containing at least Ni is synthesized and the precursor composite compound is mixed with a lithium compound to prepare a mixture.

Step (2): The mixture prepared in the step (1) is subjected to preliminary calcination.

Step (3): The mixture preliminary calcined in the step (2) is subjected to main calcination.

[Step (1)]

In synthesizing the precursor composite compound which is an aggregation system formed by aggregation of primary particles containing at least Ni, a method therefor is not particularly limited. For example, there can be adopted a method in which: an aqueous solution containing an aqueous solution of a nickel compound and various aqueous solutions of compound(s) containing other element(s) according to a composition of the desired positive electrode active material is dropped into a reaction vessel in which an alkaline aqueous solution such as an aqueous sodium hydroxide solution or an ammonia solution is used as a mother liquor and stirred; pH is monitored and controlled so that it falls within an appropriate range while dropping also sodium hydroxide or the like thereinto; and these materials are coprecipitated as, for example, hydroxides, oxides formed by calcination of the hydroxides or carbonates by a wet reaction.

In addition, in the reaction relating to the above synthesis, it is preferable that just after preparing the alkaline aqueous solution to be the mother liquor, inert gas or industrially preferably nitrogen gas is used to create a nitrogen atmosphere in the reaction vessel to reduce an oxygen concentration in a reaction vessel system and a solution as much as possible. When the oxygen concentration is too high, there is a possibility that the coprecipitated hydroxides are excessively oxidized by residual oxygen in a predetermined amount or more and formation of aggregates by crystallization is hindered.

Examples of the nickel compound are not particularly limited, and include nickel sulfate, nickel oxide, nickel hydroxide, nickel nitrate, nickel carbonate, nickel chloride, nickel iodide, metallic nickel, and the like.

Examples of the other element(s) constituting the positive electrode active material are not particularly limited, and include Co, Al, Mn, Ti, Mg, Zn, Nb, W, Mo, Sb, V, Cr, Ca, Fe, Ga, Sr, Y, Ru, In, Sn, Ta, Bi, Zr, B, and the like which are exemplified as the element M other than Li, Ni and O in the above formula (I).

Examples of the compound(s) containing other element(s) are not particularly limited, and include a cobalt compound, an aluminum compound, a manganese compound, a titanium compound, a magnesium compound, a zinc compound, a niobium compound, a tungsten compound, and the like.

Examples of the cobalt compound are not particularly limited, and include cobalt sulfate, cobalt oxide, cobalt hydroxide, cobalt nitrate, cobalt carbonate, cobalt chloride, cobalt iodide, metallic cobalt, and the like.

Examples of the aluminum compound are not particularly limited, and include aluminum sulfate, aluminum oxide, aluminum hydroxide, aluminum nitrate, aluminum carbonate, aluminum chloride, aluminum iodide, sodium aluminate, metallic aluminum, and the like.

Examples of the manganese compound are not particularly limited, and include manganese sulfate, manganese oxide, manganese hydroxide, manganese nitrate, manganese carbonate, manganese chloride, manganese iodide, metallic manganese, and the like.

Examples of the titanium compound are not particularly limited, and include titanyl sulfate, titanium oxide, titanium hydroxide, titanium nitrate, titanium carbonate, titanium chloride, titanium iodide, metallic titanium, and the like.

Examples of the magnesium compound are not particularly limited, and include magnesium sulfate, magnesium oxide, magnesium hydroxide, magnesium nitrate, magnesium carbonate, magnesium chloride, magnesium iodide, metallic magnesium, and the like.

Examples of the zinc compound are not particularly limited, and include zinc sulfate, zinc oxide, zinc hydroxide, zinc nitrate, zinc carbonate, zinc chloride, zinc iodide, metallic zinc, and the like.

Examples of the niobium compound are not particularly limited, and include niobium oxide, niobium chloride, lithium niobate, niobium iodide, and the like.

Examples of the tungsten compound are not particularly limited, and include tungsten oxide, sodium tungstate, ammonium paratungstate, hexacarbonyl tungsten, tungsten sulfide, and the like.

A blending ratio of the nickel compound to the various compounds containing other element(s) may be appropriately adjusted such that a ratio of an amount of Ni to an amount of various other element(s) is the desired one, taking into consideration the composition of the desired positive electrode active material.

When the desired positive electrode active material has, for example, a composition represented by the following formula (I):

$$Li_aNi_bM_{1-b}O_2 \qquad (I)$$

in which M is at least one element other than Li, Ni and O, a is $0.95 \leq a \leq 1.40$, and b is $0.2 < b < 1$, it is preferable that the ratio of the amount of Ni to the amount of various other element(s), i.e., b in the formula (I) is $0.2 < b < 1$, further $0.3 < b < 1$, still further $0.4 < b < 1$, yet further $0.5 < b < 1$, particularly $0.8 < b < 1$.

A suitable pH control range in synthesizing the precursor composite compound can be determined so that configurations such as desired secondary particle diameter and density degree are obtained, and is generally in a range of about 10 to about 13.

It is preferable to perform a washing treatment of the precursor composite compound obtained by a wet reaction as described above, and then perform a drying treatment after dehydration.

By performing the washing treatment, it is possible to wash away impurities such as sulfate groups, carbonate groups and Na contents which are taken into the aggregated particles during the reaction or which adhere to the surface layer. As the washing treatment, there can be adopted a method of performing Nutsche washing using a Buchner funnel if an amount of the impurities is small, or a method of feeding a suspension after the reaction to a press filter, washing the suspension with water, and dehydrating the washed suspension. Pure water, an aqueous sodium hydroxide solution, an aqueous sodium carbonate solution, or the like can be used for the washing treatment, and it is industrially preferable to use pure water. If a residual amount of the sulfate groups is large, it is possible to perform a washing treatment with an aqueous sodium hydroxide solution whose pH is controlled according to the residual amount.

The precursor composite compound synthesized in this way and the lithium compound are mixed with each other at a predetermined ratio to prepare a mixture. The mixing may be mixing: either in a solvent system in which a solution such as an aqueous solution of the precursor composite compound and a solution such as aqueous solution of the lithium compound are prepared, respectively, and these solutions are mixed with each other at a predetermined ratio; or in a non-solvent system in which powder of the precursor composite compound and powder of the lithium compound are weighed so as to be at a predetermined ratio, and these are mixed with each other by a dry method.

The lithium compound is not particularly limited, and various lithium salts can be used. Examples of the lithium compound include anhydrous lithium hydroxide, lithium hydroxide monohydrate, lithium nitrate, lithium carbonate, lithium acetate, lithium bromide, lithium chloride, lithium citrate, lithium fluoride, lithium iodide, lithium lactate, lithium oxalate, lithium phosphate, lithium pyruvate, lithium sulfate, lithium oxide, and the like. Among these, anhydrous lithium hydroxide and lithium hydroxide monohydrate are preferably used, and anhydrous lithium hydroxide is particularly preferably used.

A blending ratio of the lithium compound to the precursor composite compound may be appropriately adjusted such that a ratio of an amount of Li to the total amount of an amount of Ni and an amount of optional various other element(s) achieve the desired one, in consideration of the composition of the desired positive electrode active material.

When the desired positive electrode active material has, for example, a composition represented by the following formula (I):

$$Li_aNi_bM_{1-b}O_2 \qquad (I)$$

in which M is at least one element other than Li, Ni and O, a is $0.95 \leq a \leq 1.40$, and b is $0.2 < b < 1$, as described above, it is preferable that the ratio of the amount of Li to the total amount of the amount of Ni and the amount of optional various other element(s), i.e., a in the formula (I) is $0.95 \leq a \leq 1.25$, further $0.96 \leq a \leq 1.15$.

[Step (2)]

As described above, when a positive electrode active material containing at least Ni is produced, lithiation and crystalline growth are caused during calcination, and a certain degree of oxygen partial pressure is required for the lithiation. By the lithiation, a lithium-nickel-composite compound is obtained, and along with the lithium-nickel-composite compound, water (water vapor) is generated when, e.g., lithium hydroxide is used as the lithium compound, or carbon dioxide is generated when, e.g., lithium carbonate is used as the lithium compound. By increasing a temperature of a reaction system in lithiation to a predetermined temperature thereafter, the crystalline growth is promoted.

However, the water (water vapor) or the carbon dioxide generated by the lithiation obstructs diffusion of oxygen into a composite compound particle layer reacting with lithium, so that a required oxygen partial pressure is impaired and variation in temperature is caused.

As a result, the variation in crystalline growth of the primary particles constituting the secondary particles (the above variation A) is caused in each of the secondary particles, and the variation in primary particle diameter (the above variation B) is caused among the secondary particles. These variations (the variation A and the variation B) cause variation in composition of the secondary particles (the above variation C).

Calcination is generally performed by: weighing a lithium compound, a precursor composite compound and if necessary, an M compound; mixing them with each other by using a mixer to give mixed powder; and filling the mixed powder in a vessel such as a crucible or a saggar. In lithiation, in particular, the closer to the lower part of the vessel where the mixed powder is filled, the more difficult discharge of the generated gas to the outside and diffusion of a necessary oxygen concentration are. As a result, the above variations become to be large. In addition, there is a possibility that the above variations become to be large depending on the degree of mixing of the mixture, such as mixing failure caused when difference in particle diameter between the lithium compound and the precursor composite compound is large.

Accordingly, when the positive electrode active material according to the present invention is produced, in order that both the variation A and the variation B can be sufficiently suppressed and that the variation C can be sufficiently suppressed as well, rather than calcination of the mixture of the lithium compound with the precursor composite compound is merely performed as in conventional methods, a method is preferably adopted, in which preliminary calcination is firstly performed under the following predetermined conditions in the present step (2) and then, main calcination is further performed under the predetermined conditions in the step (3) described later.

In the preliminary calcination, it is particularly preferable to adopt a calcination method which promotes the lithiation. Particularly, condition where heat is more easily applied to the mixture is created, gas generated by the lithium compound is easily discharged, and gas with a high oxygen partial pressure is diffused into the mixture (into the particles). For example, by preliminarily calcination of a smaller amount of the mixture, properties in the present invention can be achieved.

In the step (2), the preliminary calcination of the mixture can be performed by: filling the mixture in a saggar or a crucible; and calcining the filled mixture in a static furnace, a roller hearth kiln or a pusher furnace. Also, a rotary kiln in which the mixture is calcined while being fluidized can be used.

Conditions for performing the preliminary calcination by using the rotary kiln are not particularly limited. For example, the following conditions are preferably considered.

(Filling rate)

A filling rate (a percentage represented by "Volume of mixed powder/Inner volume of rotary kiln") of the mixture in the furnace of the rotary kiln can be adjusted by changing a gas input rate and a residence time of the material (mixture) according to the types of the rotary kiln. The residence time can be adjusted by changing a retort tilting angle and a retort rotation number. For example, it is preferable that the filling rate is 5% to 40%, further 5% to 20%. When the filling rate is too high, there is a possibility that quality of the calcined product is deteriorated. When the filling rate is too low, there is a possibility that sufficient productivity is not achieved.

(Retort circumferential speed)

A retort circumferential speed can be adjusted by changing the retort rotation number, and is preferably in a range of, for example, 1m/min to 6m/min. When the retort circumferential speed is too low, there is a possibility that a powder layer of the mixture does not change place in the furnace, so that water vapor is difficult to exit to the outside of the system. When the retort circumferential speed is too high, there is a possibility that separation of mixture powder is promoted.

(In-furnace air speed and Dew point)

Both an in-furnace air speed and a dew point can be adjusted by changing the gas input rate. When the gas input rate is low and the dew point is too high, there is a possibility that irregular aggregation/sintering and the like of the primary particles and the secondary particles are caused due to: condensation which occurs particularly at a retort part into where the mixture is put; and dissolution of Li from the lithium compound in the mixture, so that the particle diameter as in the present invention cannot be achieved and quality of the calcined product is deteriorated. When the gas input rate is high and the in-furnace air speed is too high, there is a possibility that selective scattering (separation) of the mixture powder results.

(Temperature rising rate)

A temperature rising rate for the mixture subjected to the preliminarily calcination can be adjusted by setting a temperature of the rotary kiln. When the temperature rising rate is too low, there is a possibility that sufficient productivity is not achieved. When the temperature rising rate is too high, there is a possibility that the lithiation is insufficient to cause local lithiation and uniformity is not achieved, so that quality of the calcined product is deteriorated.

(Maximum temperature)

A maximum temperature of the mixture subjected to the preliminarily calcination can be adjusted by setting the temperature of the rotary kiln (by setting a retort surface temperature of the rotary kiln). In the present invention, when it is considered that the desired positive electrode active material is made to have: the variation coefficient of span within the above specific range and/or the variation coefficient of $D_1 50$ within the above specific range and further; each of the values represented by the above formulae ($\beta 1$), ($\beta 2$) and ($\beta 3$) within the above specific range, it is preferable that the maximum temperature of the mixture subjected to the preliminarily calcination is adjusted to 500°C to 650°C, further 510°C to 640°C, particularly 520°C to 630°C. When the maximum temperature is lower than the lower limit, there is a possibility that quality of the calcined product (lithium-nickel-composite oxide) is deteriorated in the later main calcination. When the maximum temperature is higher than the upper limit, there is a possibility that crystalline growth proceeds in parallel with the lithiation, so that quality of the calcined product is deteriorated. In order that the maximum temperature of the mixture subjected to the preliminarily calcination is within such range, in consideration of the above filling rate of the mixture, it is preferable to set the retort surface temperature of the rotary kiln, for example, to 530°C to 800°C, further 550°C to 780°C, particularly 700°C to 750°C.

The maximum temperature of the mixture subjected to the preliminarily calcination is preferably adjusted according to the kinds of the lithium compound used for preparation of the mixture. This adjustment makes it possible to make the precursor composite compound and the lithium compound in the mixture react with each other reliably, that is, make the lithiation proceed reliably and uniformly so that no different phases occur, so that the desired positive electrode active material as described above can be obtained.

(In-furnace adhesion prevention equipment)

Since there are cases where mixture powder containing moisture readily adheres within the furnace of the rotary kiln, particularly, in the neighborhood of an inlet into where the mixture is put during the preliminary calcination, it is preferable to use a rotary kiln provided with an external equipment such as an air knocker or an electromagnetic knocker in order to efficiently drop adherents when they occur.

(Particle size of lithium compound)

It is preferable that the lithium compound in the mixture subjected to the preliminarily calcination is previously pulverized as required so that coarse particles having a particle diameter of, for example, more than 500$\mu$m are not contained. Moreover, when a particle size of the lithium compound is too small, there is a possibility that uniformity is deteriorated since the mixture becomes to be bulky and readily separates in the rotary kiln. In addition, there is a possibility that productivity is deteriorated since a processing speed at the rotary kiln decreases. Therefore, it is preferable that the particle size is adjusted to suitable one.

In the step (2), an atmosphere of the preliminary calcination is not particularly limited and is an oxidizing atmosphere in which the lithiation proceeds reliably and uniformly. For example, it is preferable to adopt: a decarbonated oxidizing gas atmosphere in which a carbon dioxide concentration is 30ppm or less; or an oxygen atmosphere in which an oxygen concentration is preferably 80vol% or more, more preferably 90vol% or more.

A time of the preliminary calcination is not particularly limited and also is a sufficient time to proceed the lithiation reliably and uniformly. It is preferable that the time is, for example, 1 hour to 10 hours, further 2 hours to 8 hours.

[Step (3)]

In the main calcination of the mixture preliminarily calcined in the above step (2), it is important: to make crystalline growth proceed reliably and uniformly; and to obtain a positive electrode active material having the desired crystal structure. In order to perform the main calcination in the step (3), an equipment such as the static furnace or the roller hearth kiln, in which the mixture is filled in a saggar or a crucible and the filled mixture is calcined, can be used. Also, the rotary kiln can be used as in the preliminary calcination. It is preferable to use a calcination furnace capable of finely adjusting conditions suitable for crystallization and means therefor.

In the step (3), an atmosphere of the main calcination is not particularly limited and is an atmosphere in which: the crystalline growth proceeds reliably and uniformly; the oxygen partial pressure is such that Ni contained in the mixture to be calcined is not reduced; and preferably, a moisture content and the carbon dioxide concentration are low. For example, it is preferable to adopt: a decarbonated oxidizing gas atmosphere in which the carbon dioxide concentration is 30ppm or less; or an oxygen atmosphere in which the oxygen concentration is preferably 80vol% or more, more preferably 90vol% or more.

A temperature of the main calcination, i.e., a maximum temperature of the mixture which has already been subjected to the preliminary calcination (the mixture after the preliminarily calcination) in the main calcination, can be adjusted according to composition of the positive electrode active material to be obtained. For example, in the case of a positive electrode active material where the content of Ni is more than 80mol%, it is preferable that the maximum temperature of the mixture is adjusted to 700°C to 880°C, further 710°C to 850°C. When the maximum temperature is lower than the lower limit, there is a possibility that a positive electrode active material having the desired crystal structure is not obtained, so that battery properties of a non-aqueous electrolyte secondary battery using the obtained positive electrode active material as the positive electrode are impaired due to existence of many unreacted components. When the maximum temperature is higher than the upper limit, there is a possibility that the crystalline growth proceeds excessively, so that the battery properties are deteriorated. Moreover, in the case of a positive electrode active material where the content of Ni is 20mol% to 80mol%, it is preferable to perform the main calcination at a temperature where the maximum temperature of the mixture does not exceed 1100°C.

A time of the main calcination is not particularly limited and also is a sufficient time to obtain a positive electrode active material having the desired crystal structure. It is preferable that the time is, for example, 1 hour to 15 hours, further 2 hours to 10 hours.

When the positive electrode active material obtained by performing the steps (1) to (3) in this order is a high-nickel-positive electrode active material where the content of Ni is, for example, 80mol% or more (for example, a positive electrode active material having a composition represented by the above formula (I) in which b is $0.8 \leq b < 1$), there is a possibility of increase in an amount of Li compounds which will remain in a surface layer of particles (hereinafter, referred to as "residual Li compounds"), which is the sum of unreacted Li compounds and Li compound components coming out from the crystal structure to the surface layer of particles during the calcination steps, as compared with a low-nickel-positive electrode active material with a low content of Ni. An amount of the residual Li compounds can be reduced by, for example, performing a water washing treatment on the positive electrode active material or performing a surface treatment on surfaces of primary particles and/or secondary particles of the positive electrode active material.

In addition, even when the positive electrode active material obtained by performing the steps (1) to (3) in this order is a positive electrode active material where the content of Ni is low, for example, in the case of secondary particles composed of primary particles generally having a small shape, the surface treatment is sometimes performed since there is a possibility that metal elution is caused by hydrogen fluoride due to a large specific surface area thereof. Moreover, even in the case of secondary particles composed of primary particles having a large shape, a so-called calcination accelerator such as KHO is sometimes used before calcination in order to obtain the primary particle shape, and the water washing treatment can be performed in order to wash such calcination accelerator.

A method of the surface treatment is not particularly limited. For example, there can be adopted: a method in which fine particles of aluminum oxide are allowed to coat and adhere to the surface layer of particles of the positive electrode active material in a dry mode while applying a shearing force, and then, a heat treatment is performed at about 300°C to about 700°C; a method in which a predetermined amount of the positive electrode active material is allowed to encounter in an aqueous solution prepared by dissolving a predetermined amount of sodium aluminate therein to give a mixture, and the mixture is stirred for about 5 minutes to about 10 minutes, dehydrated and dried, and then heat-treated at about 250°C to about 700°C to coat the surface layer of particles of the positive electrode active material with an aluminum compound; and other methods. In addition to the aluminum compound, for example, boron compounds and tungsten compounds can be used for the surface treatment, and can be selected according to the application. Moreover, two or more kinds of compounds can be used simultaneously.

<Non-aqueous electrolyte secondary battery>

A non-aqueous electrolyte secondary battery of the present invention is provided with a positive electrode containing the positive electrode active material of the present invention produced by, for example, the method as described above. The non-aqueous electrolyte secondary battery is constituted of the positive electrode, a negative electrode, and an electrolytic solution containing an electrolyte.

The positive electrode is produced in accordance with an ordinary method. That is, a conductive agent and a binder are added to and mixed with the positive electrode active material of the present invention. As the conductive agent, for example, acetylene black, carbon black, graphite, and the like are preferable. As the binder, for example, polytetrafluoroethylene, polyvinylidene fluoride, and the like are preferable.

As the negative electrode, for example, there can be used: not only negative electrode active materials such as metallic lithium, graphite and low crystalline carbon materials; but also at least one nonmetallic element or metallic element selected from the group consisting of Si, Al, Sn, Pb, Zn, Bi, and Cd, and an alloy containing the element(s) or a chalcogen compound containing the element(s).

As a solvent of the electrolytic solution, for example, there can be used an organic solvent including at least one of: carbonates such as ethylene carbonate, propylene carbonate, dimethyl carbonate and diethyl carbonate; and ethers such as dimethoxyethane.

As the electrolyte, for example, there can be used at least one of lithium salts such as lithium perchlorate and lithium tetrafluoroborate in addition to lithium hexafluorophosphate ($LiPF_6$), which are dissolved in the above solvent.

<Function>

The positive electrode active material of the present invention can suppress cracking from the grain boundary parts thereof even when it is subjected to a long-term charge/discharge cycle, and can provide non-aqueous electrolyte secondary batteries with a sufficient battery capacity and excellent cycle properties.

EXAMPLES

The present invention will be illustrated specifically referring to typical examples of the present invention and comparative examples described below, but the present invention is not limited to these examples.

<Preparation Example 1: Preparation of Precursor composite compound 1>

A nickel sulfate aqueous solution, a cobalt sulfate aqueous solution, and an aluminum sulfate aqueous solution were mixed with each other so that a proportion (molar ratio) of Ni, Co, and Al was adjusted to Ni : Co : Al = 90 : 5 : 5 to give a mixed aqueous solution. In a reaction vessel was previously prepared 10L of pure water as a mother liquor, containing 300g of a sodium hydroxide aqueous solution and 500g of an ammonia solution, and an atmosphere in the reaction vessel was purged with nitrogen gas at a flow rate of 0.7L/min, and a reaction was carried out also under a nitrogen atmosphere.

Thereafter, the mixed aqueous solution, the sodium hydroxide aqueous solution, and the ammonia solution were dropped simultaneously at a prescribed speed with rotating agitating blades at 1000rpm. By a crystallization reaction in which a dropping amount of an alkaline solution (sodium hydroxide aqueous solution and ammonia solution) was adjusted so that pH of a reaction system was 11, the reaction system was coprecipitated so that agglomerated particles were formed by crystallization of Ni, Co, and Al to obtain a coprecipitate.

Thereafter, slurry in the reaction vessel was separated into solid and liquid, and the solid was further washed with pure water to reduce residual impurities. Then, a caked coprecipitate was dried at 110°C for 12 hours under an air atmosphere to obtain a precursor composite compound 1. An average secondary particle diameter of the precursor composite compound 1 was measured by using the above laser diffraction type particle diameter distribution measuring apparatus to find a value of 10.3$\mu$m.

<Preparation Example 2: Preparation of Precursor composite compound 2>

A nickel sulfate aqueous solution, a cobalt sulfate aqueous solution, and a manganese sulfate aqueous solution were mixed with each other so that a proportion (molar ratio) of Ni, Co, and Mn was adjusted to Ni : Co : Mn = 85 : 10 : 5 to give a mixed aqueous solution. In a reaction vessel was previously prepared 10L of pure water as a mother liquor, containing 300g of a sodium hydroxide aqueous solution and 500g of an ammonia solution, and an atmosphere in the reaction vessel was purged with nitrogen gas at a flow rate of 0.7L/min, and a reaction was carried out also under a nitrogen atmosphere.

Thereafter, the mixed aqueous solution, the sodium hydroxide aqueous solution, and the ammonia solution were dropped simultaneously at a prescribed speed with rotating agitating blades at 1000rpm. By a crystallization reaction in which a dropping amount of an alkaline solution (sodium hydroxide aqueous solution and ammonia solution) was adjusted so that pH of a reaction system was 11, the reaction system was coprecipitated so that agglomerated particles were formed by crystallization of Ni, Co, and Mn to obtain a coprecipitate.

Thereafter, slurry in the reaction vessel was separated into solid and liquid, and the solid was further washed with pure water to reduce residual impurities. Then, a caked coprecipitate was dried at 110°C for 12 hours under an air atmosphere to obtain a precursor composite compound 2. The average secondary particle diameter of the precursor composite compound 2 was measured by using the above laser diffraction type particle diameter distribution measuring apparatus to find a value of 9.9μm.

<Preparation Example 3: Preparation of Precursor composite compound 3>

A nickel sulfate aqueous solution, a cobalt sulfate aqueous solution, and an aluminum sulfate aqueous solution were mixed with each other so that a proportion (molar ratio) of Ni, Co, and Al was adjusted to Ni : Co : Al = 89 : 6 : 5 to give a mixed aqueous solution. In a reaction vessel was previously prepared 10L of pure water as a mother liquor, containing 300g of a sodium hydroxide aqueous solution and 500g of an ammonia solution, and an atmosphere in the reaction vessel was purged with nitrogen gas at a flow rate of 0.7L/min, and a reaction was carried out also under a nitrogen atmosphere.

Thereafter, the mixed aqueous solution, the sodium hydroxide aqueous solution, and the ammonia solution were dropped simultaneously at a prescribed speed with rotating agitating blades at 1000rpm. By a crystallization reaction in which a dropping amount of an alkaline solution (sodium hydroxide aqueous solution and ammonia solution) was adjusted so that pH of a reaction system was 11, the reaction system was coprecipitated so that agglomerated particles were formed by crystallization of Ni, Co, and Al to obtain a coprecipitate.

Thereafter, slurry in the reaction vessel was separated into solid and liquid, and the solid was further washed with pure water to reduce residual impurities. Then, a caked coprecipitate was dried at 110°C for 12 hours under an air atmosphere to obtain a precursor composite compound 3. The average secondary particle diameter of the precursor composite compound 3 was measured by using the above laser diffraction type particle diameter distribution measuring apparatus to find a value of 10.7μm.

<Composition of Precursor composite compound and Positive electrode active material>

Compositions of the precursor composite compound and the positive electrode active material (entire secondary particles, small particles, middle particles, and large particles) were determined in accordance with the following method. A sample, i.e., 0.2 g of the precursor composite compound or the positive electrode active material, was heated and dissolved in 25mL of a 20% hydrochloric acid solution. A resultant solution was cooled and then, transferred to a 100mL volumetric flask, and pure water was added thereto to prepare an adjusted solution. A quantity of each element in the precursor composite compound or the positive electrode active material was determined by using the adjusted solution and ICP-AES Spectrometer "Optima 8300" commercially available from PerkinElmer Japan Co., Ltd.

<Coin cell assembled by using Positive electrode active material>

A coin cell having 2032 size was assembled by using a positive electrode containing the positive electrode active material, a negative electrode, and an electrolytic solution, which were manufactured in accordance with the following procedures, respectively.

(Positive electrode)

By using: acetylene black and graphite (acetylene black : graphite = 1 : 1 (weight ratio)) as a conductive agent; and polyvinylidene fluoride as a binder, the positive electrode active material, the conductive agent, and the binder were blended with each other (positive electrode active material : conductive agent: binder = 90 : 6 : 4 (weight ratio)). These were mixed with N-methylpyrrolidone to give slurry and then, the slurry was coated on an aluminum foil. The aluminum foil coated with the slurry was dried at 110°C to give a sheet. A sample having a diameter of 15mm was stamped out from the sheet and then, the sample was rolled so that a density of a composite material was 3.0g/cm$^3$ to give a positive electrode.

(Negative electrode)

A sample having a diameter of 16mm was stamped out from a lithium foil having a thickness of 500μm to give a negative electrode.

(Electrolytic solution)

A mixed solvent of ethylene carbonate (EC) and dimethyl carbonate (DMC) (EC : DMC = 1 : 2 (volume ratio)) was prepared, and 1M LiPF$_6$ as an electrolyte was mixed therewith to give an electrolytic solution.

<Initial charge capacity and Initial charge/discharge efficiency of Non-aqueous electrolyte secondary battery>

The coin cell assembled in accordance with the above method was subjected to constant current charge at a current density of 20mA/g up to 4.30V (upper limit voltage) under an environment of 25°C and then, the coin cell was subjected to constant voltage charge until the current density reached 2mA/g. A capacity at these charges was indicated as an initial charge capacity (mAh/g).

After pause for 5 minutes, the coin cell was subjected to constant current discharge at a current density of 20mA/g down to 3.00V under the same environment. Then, after pause for 5 minutes, an initial discharge capacity (mAh/g) was measured.

An initial charge/discharge efficiency was calculated in accordance with the following equation by using the measured value of the initial charge capacity and the measured value of the initial discharge capacity.

$$\text{Initial charge/discharge efficiency (\%)}$$
$$= (\text{Initial discharge capacity/Initial charge capacity}) \times 100$$

<Cycle property of Non-aqueous electrolyte secondary battery>

The coin cell assembled in accordance with the above method was subjected to constant current charge at a current density of 100mA/g up to 4.30V (upper limit voltage) under an environment of 60°C and then, the coin cell was subjected to constant voltage charge until the current density reached 2mA/g. After pause for 5 minutes, the coin cell was subjected to constant current discharge at a current density of 200mA/g down to 3.00V under the same environment and then, pause was performed for 5 minutes. With a series of these operations being taken as one cycle of charge/discharge, 100 cycles of charge/discharge were performed. A cycle retention was calculated in accordance with the following equation by using the measured value of a discharge capacity on the 1st cycle and the measured value of a discharge capacity on the 100th cycle.

$$\text{Cycle retention (\%)}$$
$$= (\text{Discharge capacity on } 100^{\text{th}} \text{ cycle/Discharge capacity on } 1^{\text{st}} \text{ cycle}) \times 100$$

<Example 1>

The precursor composite compound 1 and anhydrous lithium hydroxide were weighed so that a proportion (molar ratio) of Li to the total amount of Ni, Co, and Al was adjusted to Li/(Ni + Co + Al) = 1.02, and these were mixed with each other by using a mixer to prepare mixture powder. The anhydrous lithium hydroxide was previously pulverized before use so that coarse anhydrous lithium hydroxide particles having a particle diameter of over 500μm were not contained in the mixture powder.
Then, the mixture powder was subjected to preliminary calcination for 6 hours under the following conditions by using a rotary kiln having a retort diameter of 300mm under an oxygen atmosphere (oxygen concentration: 97vol%).

(Rotary kiln condition)

Filling rate: 20%
Retort circumferential speed: Adjusting Retort rotation number to 1.3rpm
Tilting angle: Adjusted to 1/100
In-furnace air speed and Dew point: Adjusting Gas input rate to 50L/min
Temperature rising rate: Setting Retort surface temperature as described below
Maximum temperature of mixture powder: 600°C
Retort surface temperature: 630°C

Then, 8kg of the mixture powder after preliminary calcination was filled in a saggar having a width of 300mm and a depth of 100mm, and the mixture powder was subjected to main calcination for 4 hours by using a roller hearth kiln under an oxygen atmosphere (oxygen concentration: 97vol%) so that the maximum temperature of the mixture powder reached 740°C to obtain a positive electrode active material.

Secondary particles of the positive electrode active material were confirmed by SEM images having a magnification of 2000, and 10 particles were extracted. Thereafter, high magnification SEM images of particles were obtained and subjected to image analysis, and a $D_1 50$ in the primary particle size distribution and a span were calculated.

<Example 2>

Mixture powder was subjected to preliminary calcination in the same manner as in Example 1 except that: the precursor composite compound 2 was used instead of the precursor composite compound 1; the precursor composite compound 2 and the anhydrous lithium hydroxide were weighed so that a proportion (molar ratio) of Li to the total amount of Ni, Co, and Mn was adjusted to Li/(Ni + Co + Mn) = 1.04, and these were mixed with each other to prepare the mixture powder; and the retort surface temperature was adjusted so that the maximum temperature of the mixture powder reached 630°C.

Then, 8kg of the mixture powder after preliminary calcination was filled in the saggar having a width of 300mm and a depth of 100mm, and the mixture powder was subjected to main calcination for 4 hours by using the roller hearth kiln under an oxygen atmosphere (oxygen concentration: 97vol%) so that the maximum temperature of the mixture powder reached 830°C to obtain a positive electrode active material. For the positive electrode active material, the $D_1 50$ in the primary particle size distribution and the span were calculated in the same manner as in Example 1.

<Comparative Example 1>

The precursor composite compound 1 and anhydrous lithium hydroxide were weighed so that a proportion (molar ratio) of Li to the total amount of Ni, Co, and Al was adjusted to Li/(Ni + Co + Al) = 1.02, and these were mixed with each other by using a mixer to prepare mixture powder. The anhydrous lithium hydroxide was previously pulverized before use so that coarse anhydrous lithium hydroxide particles having a particle diameter of over $500\mu$m were not contained in the mixture powder.

Then, 8kg of the mixture powder was filled in the saggar having a width of 300mm and a depth of 100mm, and the mixture powder was subjected to preliminary calcination for 5 hours by using the roller hearth kiln under an oxygen atmosphere (oxygen concentration: 97vol%) so that the maximum temperature of the mixture powder reached 600°C.

Then, the mixture powder after preliminary calcination was subjected to main calcination for 4 hours by using the roller hearth kiln in the same state under the same oxygen atmosphere so that the maximum temperature of the mixture powder reached 740°C to obtain a positive electrode active material. For the positive electrode active material, the $D_1 50$ in the primary particle size distribution and the span were calculated in the same manner as in Example 1.

<Comparative Example 2>

Mixture powder was subjected to preliminary calcination in the same manner as in Comparative Example 1 except that: the precursor composite compound 2 was used instead of the precursor composite compound 1; the precursor composite compound 2 and the anhydrous lithium hydroxide were weighed so that a proportion (molar ratio) of Li to the total amount of Ni, Co, and Mn was adjusted to Li/(Ni + Co + Mn) = 1.04, and these were mixed with each other to prepare the mixture powder; and the maximum temperature of the mixture powder was adjusted to 630°C.

Then, the mixture powder after preliminary calcination was subjected to main calcination for 4 hours by using the roller hearth kiln in the same state under the same oxygen atmosphere so that the maximum temperature of the mixture powder reached 830°C to obtain a positive electrode active material. For the positive electrode active material, the $D_1 50$ in the primary particle size distribution and the span were calculated in the same manner as in Example 1.

Calcination conditions in Examples 1 to 2 and Comparative Examples 1 to 2 are summarized in Table 1.

As properties of the positive electrode active materials obtained in Examples 1 to 2 and Comparative Examples 1 to 2, the $D_1 50$, the variation coefficient of span and the variation coefficient of $D_1 50$ of the primary particles; the $D_2 50$ of the entire secondary particles; the crystallite size; and the seat occupancy rate of Li were determined in accordance with the above methods, respectively. The results are shown in Table 2.

Additionally, as battery properties of the non-aqueous electrolyte secondary battery in which the positive electrode active material obtained in each of Examples 1 to 2 and Comparative Examples 1 to 2 was used for the positive electrode, the initial charge capacity, the initial charge/discharge efficiency, and the cycle retention were determined in accordance with the above methods, respectively. The results are shown in Table 3.

[Table 1]

| | Preliminary calcination condition | | | | Main calcination condition | | | |
|---|---|---|---|---|---|---|---|---|
| | Calcination furnace | Atmosphere | Temperature[3] (°C) | Time (hr) | Calcination furnace | Atmosphere | Temperature[3] (°C) | Time (hr) |
| Ex. 1 | RK[1] | Oxygen | 600 | 6 | RHK[2] | Oxygen | 740 | 4 |
| Ex. 2 | RK[1] | Oxygen | 630 | 6 | RHK[2] | Oxygen | 830 | 4 |
| Com. Ex. 1 | RHK[2] | Oxygen | 600 | 5 | RHK[2] | Oxygen | 740 | 4 |
| Com. Ex. 2 | RHK[2] | Oxygen | 630 | 5 | RHK[2] | Oxygen | 830 | 4 |

1) Rotary kiln
2) Roller hearth kiln
3) Maximum temperature of mixture powder

[Table 2]

| | | Property of Positive electrode active material | | | | |
|---|---|---|---|---|---|---|
| | | Primary particles | | | $D_250$ of entire secondary particles ($\mu$m) | Crystallite size (nm) | Seat occupancy rate of Li (%) |
| | $D_150$ ($\mu$m) | Variation coefficient of span (%) | Variation coefficient of $D_150$ (%) | | | |
| Ex. 1 | 0.27 | 7.4 | 8.8 | 11.1 | 172 | 97.8 |
| Ex. 2 | 0.33 | 13.9 | 9.9 | 10.3 | 306 | 97.6 |
| Com. Ex. 1 | 0.23 | 25.8 | 22.1 | 10.9 | 193 | 97.4 |
| Com. Ex. 2 | 0.40 | 20.7 | 19.2 | 10.1 | 329 | 97.1 |

[Table 3]

| | Battery property of Non-aqueous electrolyte secondary battery | | |
|---|---|---|---|
| | Initial charge capacity (mAh/g) | Initial charge/discharge efficiency (%) | Cycle retention (%) |
| Ex. 1 | 239.8 | 80.1 | 90.4 |
| Ex. 2 | 226.2 | 88.4 | 91.2 |
| Com. Ex. 1 | 239.3 | 83.8 | 82.5 |
| Com. Ex. 2 | 227.4 | 89.2 | 85.6 |

In the positive electrode active materials of Examples 1 to 2, the primary particles have very small variation coefficient of span, which is less than 15%, that is, variation in distribution of the primary particles is sufficiently suppressed in each of 10 or more secondary particles. Moreover, the primary particles have also very small variation coefficient of $D_150$, which is less than 10%, that is, variation in primary particle diameter is sufficiently suppressed among 10 or more secondary particles.

From the results of Examples 1 to 2, it is shown the sizes of the primary particles in the secondary particles after calcinations are about the same as each other irrespective of the secondary particles, so that it is suggested: the seat occupancy rate of Li is high; and fragile parts in particles and at grain boundaries are few as described above.

Therefore, the positive electrode active material of Example 1 shows very excellent cycle property while maintaining about equivalent initial charge capacity and initial charge/discharge efficiency as compared with the positive electrode active material of Comparative Example 1, and the same applies to the positive electrode active material of Example 2 as compared with the positive electrode active material of Comparative Example 2.

<Example 3>

The precursor composite compound 3 and anhydrous lithium hydroxide were weighed so that a proportion (molar ratio) of Li to the total amount of Ni, Co, and Al was adjusted to Li/(Ni + Co + Al) = 1.021, and these were mixed with each other by using a mixer to prepare mixture powder. The anhydrous lithium hydroxide was previously pulverized before use so that coarse anhydrous lithium hydroxide particles having a particle diameter of over $500\mu$m were not contained in the mixture powder.

Then, the mixture powder was subjected to preliminary calcination for 4 hours under the following conditions by using a rotary kiln having a retort diameter of 300mm under an oxygen atmosphere (oxygen concentration: 97vol%).

(Rotary kiln condition)
Filling rate: 7%
Retort circumferential speed: Adjusting Retort rotation number to 1.3rpm
Tilting angle: Adjusted to 1/100
In-furnace air speed and Dew point: Adjusting Gas input rate to 50L/min
Temperature rising rate: Setting Retort surface temperature as described below

Maximum temperature of mixture powder: 610°C
Retort surface temperature: 635°C

Then, 8kg of the mixture powder after preliminary calcination was filled in a saggar having a width of 300mm and a depth of 100mm, and the mixture powder was subjected to main calcination for 4 hours by using a roller hearth kiln under an oxygen atmosphere (oxygen concentration: 97vol%) so that the maximum temperature of the mixture powder reached 750°C to obtain a positive electrode active material.

<Example 4>

A positive electrode active material was obtained in the same manner as in Example 3 except that the filling rate was changed to 15% among the rotary kiln conditions.

<Comparative Example 3>

The precursor composite compound 3 and anhydrous lithium hydroxide were weighed so that a proportion (molar ratio) of Li to the total amount of Ni, Co, and Al was adjusted to Li/(Ni + Co + Al) = 1.025, and these were mixed with each other by using a mixer to prepare mixture powder. The anhydrous lithium hydroxide was previously pulverized before use so that coarse anhydrous lithium hydroxide particles having a particle diameter of over 500μm were not contained in the mixture powder.

Then, 8kg of the mixture powder was filled in the saggar having a width of 300mm and a depth of 100mm, and the mixture powder was subjected to preliminary calcination for 4 hours by using the roller hearth kiln under an oxygen atmosphere (oxygen concentration: 97vol%) so that the maximum temperature of the mixture powder reached 600°C.

Then, the mixture powder after preliminary calcination was subjected to main calcination for 4 hours by using the roller hearth kiln in the same state under the same oxygen atmosphere so that the maximum temperature of the mixture powder reached 750°C to obtain a positive electrode active material.

Calcination conditions in Examples 3 to 4 and Comparative Example 3 are summarized in Table 4.

As properties of the positive electrode active materials obtained in Examples 3 to 4 and Comparative Example 3, the $D_2 50$, the $D_2 10$ and the $D_2 90$ in the secondary particle size distribution; and the span were calculated. By using a sieve (opening of mesh: 16μm and 20μm, specifications conforming to ISO (International Organization for Standardization) 3301-1/JIS (Japanese Industrial Standards) Z-8801), the small particles, the middle particles and the large particles each having a predetermined particle diameter were obtained. Then, for the small particles, the middle particles and the large particles, each $D_2 50$ in the secondary particle size distribution was calculated. After the ER1, the ER21, the ER22 and the ER23 were determined, each of values represented by the above formula (β1), the above formula (β2) and the above formula (β3) was calculated. The variation coefficient was determined by using the ER21, the ER22 and the ER23. The crystallite size was also determined. The results are shown in Table 5 and Table 6.

Additionally, as battery properties of the non-aqueous electrolyte secondary battery in which the positive electrode active material obtained in each of Examples 3 to 4 and Comparative Example 3 was used for the positive electrode, the initial charge capacity, the initial charge/discharge efficiency, and the cycle retention were determined in accordance with the above methods, respectively. The results are shown in Table 7.

[Table 4]

| | Preliminary calcination condition | | | | Main calcination condition | | | |
|---|---|---|---|---|---|---|---|---|
| | Calcination furnace | Atmosphere | Temperature[3] (°C) | Time (hr) | Calcination furnace | Atmosphere | Temperature[3] (°C) | Time (hr) |
| Ex. 3 | RK[1] | Oxygen | 610 | 4 | RHK[2] | Oxygen | 750 | 4 |
| Ex. 4 | RK[1] | Oxygen | 610 | 4 | RHK[2] | Oxygen | 750 | 4 |
| Com. Ex. 3 | RHK[2] | Oxygen | 600 | 4 | RHK[2] | Oxygen | 750 | 4 |

1) Rotary kiln
2) Roller hearth kiln
3) Maximum temperature of mixture powder

[Table 5]

| | Property of Positive electrode active material (Secondary particles) | | | | | | |
|---|---|---|---|---|---|---|---|
| | Entire secondary particles | | | | $D_2 50$ of small particles ($\mu$m) | $D_2 50$ of middle particles ($\mu$m) | $D_2 50$ of large particles ($\mu$m) |
| | $D_2 50$ ($\mu$m) | $D_2 10$ ($\mu$m) | $D_2 90$ ($\mu$m) | Span (-) | | | |
| Ex. 3 | 12.2 | 8.0 | 19.5 | 0.94 | 9.5 | 13.9 | 18.2 |
| Ex. 4 | 12.3 | 8.1 | 19.7 | 0.94 | 10.5 | 14.9 | 19.6 |
| Com. Ex. 3 | 12.1 | 8.1 | 19.5 | 0.94 | 10.5 | 14.7 | 19.6 |

[Table 6]

| | Property of Positive electrode active material (Secondary particles) | | | | | | | | |
|---|---|---|---|---|---|---|---|---|---|
| | ER1 (-) | ER21 (-) | ER22 (-) | ER23 (-) | Value of formula ($\beta 1$) (%) | Value of formula ($\beta 2$) (%) | Value of formula ($\beta 3$) (%) | Variation coefficient (%) | Crystallite size (nm) |
| Ex. 3 | 1.021 | 1.017 | 1.019 | 1.017 | 0.39 | 0.20 | 0.39 | 0.11 | 201 |
| Ex. 4 | 1.022 | 1.019 | 1.020 | 1.020 | 0.29 | 0.20 | 0.20 | 0.06 | 167 |
| Com. Ex. 3 | 1.023 | 1.031 | 1.016 | 1.008 | 0.78 | 0.68 | 1.47 | 1.15 | 213 |

[Table 7]

| | Battery property of Non-aqueous electrolyte secondary battery | | |
|---|---|---|---|
| | Initial charge capacity (mAh/g) | Initial charge/discharge efficiency (%) | Cycle retention (%) |
| Ex. 3 | 238.8 | 82.1 | 91.8 |
| Ex. 4 | 238.0 | 81.8 | 90.2 |
| Com. Ex. 3 | 239.3 | 83.8 | 82.5 |

In the positive electrode active materials of Examples 3 to 4, each of values represented by the formula ($\beta 1$), the formula ($\beta 2$) and the formula ($\beta 3$) is very small, which is 1.00% or less, that is, variation in composition in the secondary particles is sufficiently suppressed. In the positive electrode active materials of Examples 3 to 4, the span calculated based on the secondary particle size distribution is about 0.95, that is, the positive electrode active materials of Examples 3 to 4 have relatively broad secondary particle size distribution. In general, the broader distribution is, the larger variation of small and large particles tends to be. On the other hand, suppression of variations could be achieved in the present invention. From this, since variation in calcination and the like is generally difficult to occur in a positive electrode active material having sharp secondary particle size distribution, in which the span calculated based on the distribution is about 0.5, it is expected that such suppression of variations can be achieved.

Therefore, the positive electrode active materials of Examples 3 to 4 show very excellent cycle property while maintaining about equivalent initial charge capacity and initial charge/discharge efficiency as compared with the positive electrode active material of Comparative Example 3.

INDUSTRIAL APPLICABILITY

The positive electrode active material according to the present invention is suitable for positive electrodes of non-aqueous electrolyte secondary batteries since the positive electrode active material is capable of providing the non-aqueous electrolyte secondary batteries with a sufficient battery capacity and excellent cycle properties.

**Claims**

1. A positive electrode active material for non-aqueous electrolyte secondary batteries, comprising a lithium-nickel-composite oxide containing lithium and nickel, and optionally containing at least one element other than lithium and nickel, wherein

   primary particles constituting each of secondary particles of the lithium-nickel-composite oxide have a variation coefficient of span of 17% or less, the span being represented by a formula ($\alpha$):

   $$(D_190 - D_110)/D_150 \qquad (\alpha)$$

   in which:

   $D_110$ is a particle diameter corresponding to 10% of an integrated value in a number standard-particle diameter distribution of primary particle size;
   $D_150$ is a particle diameter corresponding to 50% of the integrated value in the number standard-particle diameter distribution of primary particle size, and the $D_150$ is an average particle diameter; and
   $D_190$ is a particle diameter corresponding to 90% of the integrated value in the number standard-particle diameter distribution of primary particle size.

2. A positive electrode active material for non-aqueous electrolyte secondary batteries, comprising a lithium-nickel-composite oxide containing lithium and nickel, and optionally containing at least one element other than lithium and nickel, wherein
   primary particles constituting each of secondary particles of the lithium-nickel-composite oxide have a variation coefficient of $D_150$ of 19% or less, the $D_150$ being a particle diameter corresponding to 50% of an integrated value in a number standard-particle diameter distribution of primary particle size, and the $D_150$ being an average particle diameter.

3. A positive electrode active material for non-aqueous electrolyte secondary batteries, comprising a lithium-nickel-composite oxide containing lithium and nickel, and optionally containing at least one element other than lithium and nickel, wherein

   secondary particles of the lithium-nickel-composite oxide have each of values of 1.00% or less, each of the values being represented by a formula ($\beta$1), a formula ($\beta$2), or a formula ($\beta$3):

   $$|[(ER1 - ER21)/ER1]| \times 100 \qquad (\beta1)$$

   $$|[(ER1 - ER22)/ER1]| \times 100 \qquad (\beta2)$$

   $$|[(ER1 - ER23)/ER1]| \times 100 \qquad (\beta3)$$

   in which:

   ER1 is an element ratio of entire secondary particles;
   ER22 is an element ratio of middle particles having a particle diameter of a range within $\pm 3\mu$m relative to $D_250$ of the entire secondary particles, the $D_250$ being a particle diameter corresponding to 50% of an integrated value in a volume standard-particle diameter distribution of secondary particle size, and the $D_250$ being an average particle diameter;
   ER21 is an element ratio of small particles having a particle diameter smaller than the particle diameter of the middle particles;
   ER23 is an element ratio of large particles having a particle diameter larger than the particle diameter of the middle particles; and
   each element ratio is a ratio of an amount of lithium to a total amount of nickel and the element other than lithium and nickel, the ratio being represented by a formula: (Amount of lithium)/(Total amount of nickel and the element).

4. A non-aqueous electrolyte secondary battery comprising a positive electrode containing the positive electrode active material according to any one of claims 1 to 3.

## INTERNATIONAL SEARCH REPORT

| | International application No. |
| --- | --- |
| | **PCT/JP2021/029259** |

### A. CLASSIFICATION OF SUBJECT MATTER

*H01M 4/525*(2010.01)i
FI:  H01M4/525

According to International Patent Classification (IPC) or to both national classification and IPC

### B. FIELDS SEARCHED

Minimum documentation searched (classification system followed by classification symbols)

H01M4/525

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | US 2020/0099045 A1 (UCHICAGO ARGONNE, LLC) 26 March 2020 (2020-03-26) entire text, all drawings | 1-4 |
| A | CN 111082042 A (SINGULAR (BEIJING) TECHNOLOGY CO., LTD.) 28 April 2020 (2020-04-28) entire text, all drawings | 1-4 |
| A | WO 2015/115547 A1 (SUMITOMO METAL MINING CO., LTD.) 06 August 2015 (2015-08-06) entire text, all drawings | 1-4 |
| A | JP 2020-35625 A (TANAKA CHEMICAL CORPORATION) 05 March 2020 (2020-03-05) entire text, all drawings | 3-4 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 October 2021** | **26 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/029259**

| Patent document cited in search report | | | Publication date (day/month/year) | Patent family member(s) | | | Publication date (day/month/year) |
|---|---|---|---|---|---|---|---|
| US | 2020/0099045 | A1 | 26 March 2020 | (Family: none) | | | |
| CN | 111082042 | A | 28 April 2020 | (Family: none) | | | |
| WO | 2015/115547 | A1 | 06 August 2015 | US | 2017/0012288 | A1 | |
| | | | | entire text, all drawings | | | |
| | | | | CN | 105934409 | A | |
| JP | 2020-35625 | A | 05 March 2020 | US | 2021/0175502 | A1 | |
| | | | | entire text, all drawings | | | |
| | | | | WO | 2020/044795 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019194150 A

- JP 6075440 B

**Non-patent literature cited in the description**

- The Rietveld Method. Oxford University Press, 1992